# EUROPÄISCHE PATENTSCHRIFT

(11) **EP 3 730 279 B1**
(45) Veröffentlichungstag und Bekanntmachung des Hinweises auf die Patenterteilung: **08.11.2023**
(21) Anmeldenummer: 20169561.6
(22) Anmeldetag: 15.04.2020
(51) Int. Cl.: B29C 65/22, B65B 51/14, B29C 65/78, B65B 11/50

(54) **SCHWEISSEINRICHTUNG SOWIE VERFAHREN ZUM VERSCHWEISSEN VON ZUMINDEST ZWEI ÜEBEREINANDERLIEGENDEN FOLIEN**
WELDING DEVICE AND METHOD FOR WELDING AT LEAST TWO OVERLAPPING SHEETS
DISPOSITIF DE SOUDAGE AINSI QUE PROCÉDÉ DE SOUDAGE D'AU MOINS DEUX FEUILLES SUPERPOSÉES

(30) Priorität: 26.04.2019 AT 503812019
(43) Veröffentlichungstag der Anmeldung: 28.10.2020
(73) Patentinhaber: S.A.M. Innovations GmbH & Co KG, 9020 Klagenfurt am Wörthersee (AT)
(72) Erfinder: Kuchler, Fritz, verstorben (AT); Kuchler, Constantin, 9210 Pörtschach am Wörthersee (AT); Kuchler, Valentina, 9212 Techelsberg am Wörther See (AT)
(74) Vertreter: Speringer, Markus

(56) Entgegenhaltungen:
- EP-A1- 3 184 441
- EP-A2- 2 428 454
- EP-A2- 2 868 586
- AT-A1- 500 725
- AT-A4- 507 893
- AT-A4- 519 234

## Beschreibung

### Technisches Gebiet

Die Erfindung betrifft eine Schweißeinrichtung zum Verschweißen von zumindest zwei übereinanderliegenden Folien, insbesondere ausgebildet als Ablegetablett für eine Aufschnittschneidemaschine, umfassend eine als Ablegebereich für die Folien ausgebildete Basisfläche, ein Heizelement sowie jeweils um ihre Längsachse umklappbare Leisten, welche zwischen einer Ausgangsstellung, in welcher die Basisfläche von oben frei zugänglich ist, und einer Arbeitsstellung, in welcher die Leisten mit ihren Endabschnitten das Heizelement abdecken, schwenkbar sind. Die Erfindung betrifft ferner ein Verfahren zum Verschweißen von zumindest zwei Folien mittels der genannten Vorrichtung.

### Stand der Technik

In der AT 507893, EP 2868586, EP 3184441, AT 500725, AT 519234 und der EP2428454 werden jeweils Schweißeinrichtungen der eingangs genannten Art beschrieben. Diese Schweißeinrichtungen haben den Vorteil, dass sie besonders kompakt ausgebildet werden können und somit wenig Stellfläche benötigen. Sie können aufgrund der geringen Bauhöhe einfach im Ablegebereich einer automatischen Aufschnittschneidemaschine platziert werden. Durch die sich nach oben öffnenden Leisten kann die Ablage von Verpackungsfolien sowie Schnittgut in herkömmlicher Weise erfolgen, wodurch jede Aufschnittschneidemaschine mit einer derartigen Schweißeinrichtung nachrüstbar ist. Nachteilig bei den beschriebenen Vorrichtungen ist, dass nur Kleinpackungen mit Schnittgut erzeugt werden können. Bei größeren Mengen an Schnittgut führt dies zu einer mittigen Ausbeulung der Deckfolie, welche in Folge dann von den Leisten am Rand oft nicht richtig erfasst werden kann, was zu einem ungleichmäßigen Verschweißen führen würde. Aus diesem Grund muss die Schnittgutmenge pro Verpackung begrenzt werden, was in Summe zu mehr Verpackungsmaterial führt, wenn größere Mengen Schnittgut produziert werden. Eine weitere Problematik der bestehenden Schweißeinrichtungen besteht darin, dass an den Ecken kurze Bereiche vorhanden sind, an denen keine Verschweißung vorhanden ist. Durch die unvollständige Verschweißung können diese Verpackungen, je nach Gesetzeslage, nicht für den Versand verwendet werden bzw. werden zusätzliche Überverpackungen für diesen Anwendungsfall benötigt.

### Kurzbeschreibung der Erfindung

Es ist nun Aufgabe der Erfindung, eine Schweißeinrichtung sowie ein Verfahren zum Verschweißen zu schaffen, welches die oben genannten Probleme beseitig und wodurch es ermöglicht wird, auch größere Schnittgutmengen mit nur einer einzigen Schweißeinrichtung sicher zu verschweißen. Die Verschweißung soll über den gesamten Rand hinweg durchgehend sein. Der Aufbau der Schweißeinrichtung soll dabei so einfach wie möglich sein, damit sie kostengünstig zu fertigen ist und weiterhin kompakt genug ist, um im Ablegebereich einer automatischen Aufschnittschneidemaschine platziert zu werden.

Diese Aufgabe wird erfindungsgemäß durch eine Schweißeinrichtung gelöst, bei welcher die Drehachsen der Leisten in einem gleichbleibenden Normalabstand zur Basisfläche nach oben hin beabstandet sind, sodass die Leisten in der Arbeitsstellung schräg zur Basisfläche hin geneigt sind. Dadurch wird es ermöglicht, dass beim Verschwenken der Leisten diese die Deckfolie zum Rand hin ausstreichen und sicher festklemmen, wodurch auch Schnittgut mit höherer Dicke sicher und vollständig zwischen zwei Folien eingeschweißt werden kann. Bei der Schweißeinrichtung gemäß dem Stand der Technik liegt die Drehachse der Leisten unmittelbar angrenzend der Basisfläche. Beim Verschwenken kommt also die Leiste mit der Deckfolie in Kontakt bevor sie die waagrechte Stellung erreicht hat. Wenn eine höhere Schnittgutmenge unter der Deckfolie liegt und diese dadurch mittig ausgebeult ist, kann es vorkommen, dass die freien Endabschnitte der Leisten somit beim Verschwenken in die Arbeitsstellung die Deckfolie leicht in Richtung Mitte der Auflagefläche verschieben und somit nicht mehr richtig über dem Heizelement zusammenpressen. Durch die erhöhte Anordnung der Drehachsen der Leisten kommen die freien Endabschnitte erst mit der Deckfolie in Kontakt, wenn die Leisten die Waagrechte passiert haben und sich somit wieder in Richtung Rand der Folie wegdrehen. Die Deckfolie wird somit ab Berührung mit der jeweiligen Leiste in Richtung des Rands der Basisfläche gezogen und ausgestrichen, wodurch eine sichere Klemmung über dem Heizelement auch bei dickerem Schnittgut erreicht wird.

Gemäß einem weiteren bevorzugten Merkmal ist es vorgesehen, dass die Leisten zwischen der Ausgangsstellung und der Arbeitsstellung um mehr als 100°, vorzugsweise um mehr als 180° verschwenkbar sind. Dies erlaubt es, die Schweißeinrichtung einfach von oben mit Folien sowie Schnittgut zu befüllen. Bei vollem Zurückschwenken der Leisten um mehr als 180° ist sichergestellt, dass die aufgelegten Folien beim Auflegen nicht an den Leisten hängenbleiben können. Außerdem kann so der Normalabstand der Drehachse zur Basisfläche maximiert werden und dennoch eine geringe Bauhöhe eingehalten werden, was notwendig ist, damit die Schweißeinrichtung im Ablegebereich einer Auschnittschneidemaschine unterhalb der Unterkante eines Kettenrahmens platziert werden kann.

Dabei ist es ein zusätzliches bevorzugtes Merkmal, dass an den Endabschnitten der Leisten, welche mit der Folie in Berührung kommen, Kontaktelemente aus einem Material mit hoher Reibung, wie beispielsweise aus Gummi, Silikon oder dergleichen, vorgesehen sind. Durch die Erhöhung der Reibung an den relevanten Abschnitten der Leisten wird das Greifen der Deckfolie beim Verschwenken der Leisten verbessert und die Folie wird gleichmäßig über das Schnittgut gespannt und festgehalten.

Es ist ferner ein bevorzugtes Merkmal, dass das Heizelement einen die Basisfläche umrandenden durchgehenden Ring, vorzugsweise in Form eines Rechtecks mit abgerundeten Ecken, ausbildet. Dadurch ist es möglich, die Folie mit einer durchgehenden Schweißnaht zu versehen, wodurch die Verpackungen auch für jede Anwendung, wie den Postversand, geeignet sind. Die Leisten können dabei in den Eckbereichen mit jeweils gegengleichen Abschrägungen ausgebildet sein, sodass sie in der Arbeitsstellung im Bereich des Heizelements unmittelbar aneinander liegen.

Gemäß einer bevorzugten Ausführungsform ist es dabei vorgesehen, dass das Heizelement in die Basisfläche integriert ist. Dies stellt eine besonders einfache Variante der erfindungsgemäßen Schweißeinrichtung dar, bei welcher die Folien und/oder das Schnittgut sowohl automatisch oder auch von Hand aufgelegt werden können.

Gemäß einer alternativen bevorzugten Ausführungsform ist es vorgesehen, dass das Heizelement in einem Auswerferarm integriert ist, welcher in seiner Ausgangsstellung in Vertiefungen in der Basisfläche liegt, und welcher zum Auswerfen der fertig verschweißten Folienverpackungen in eine Auswurfstellung hochschwenkbar ist. Diese Ausführungsform hat besondere Vorteile bei vollautomatischen Aufschnittschneideanlagen. Hiermit kann nicht nur das Platzieren der Folien sowie des Schnittguts, sondern auch die Entnahme der fertigen Verpackungen automatisiert werden, wodurch keinerlei Benutzerinteraktion mehr erforderlich ist.

Die Erfindung wird ferner durch ein erfindungsgemäßes Verfahren zum Verschweißen von zumindest zwei übereinanderliegenden Folien unter Verwendung einer oben beschriebenen Vorrichtung gelöst, wobei das Verfahren folgende Schritte umfasst:
- nach dem Auflegen von zumindest zwei Folien auf der Basisfläche werden die Leisten von der Ausgangsstellung in Richtung der Arbeitsstellung verschwenkt,
- bei Erreichen der Arbeitsstellung wird über in der Schweißeinrichtung angeordnete Sensoren sichergestellt, dass alle Leisten die Arbeitsstellung erreicht haben,
- anschließend wird das Drehmoment an den Drehachsen der Leisten in Richtung der Arbeitsstellung erhöht, sodass die Folien von den Leisten in Richtung des Heizelements gepresst werden,
- danach wird das Heizelement zum Verschweißen der Folien aktiviert,
- die Leisten werden nach dem Schweißvorgang und dem Deaktivieren des Heizelements wieder in Richtung

Ausgangsstellung geschwenkt und die fertige Folienverpackung kann entnommen bzw. ausgeworfen werden.

Durch das erfindungsgemäße Verfahren wird die Sicherheit der Vorrichtung erhöht. Durch die von der Basisfläche beabstandete Drehachse der Leisten ist es für einen Benutzer möglich, mit den Fingern in jenen Bereich zu greifen, in dem die Leisten zum Verschweißen zusammenklappen. Um Verletzungen zu vermeiden, ist es daher vorgesehen, dass der eigentliche Schwenkvorgang mit geringer Kraft ausgeführt wird, wodurch Verletzungen vermieden werden. Für den Schweißvorgang selbst wird jedoch dann ein höherer Anpressdruck benötigt als für den Schwenkvorgang. Aus diesem Grund wird vor dem Verschweißen die Stellung der einzelnen Leisten überprüft und nur wenn alle die Arbeitsstellung auch erreicht haben, wird der Anpressdruck erhöht und die Verschweißung durch Aktivierung des Heizelements durchgeführt. Sollte eine Leiste die Arbeitsstellung nicht erreichen, beispielsweise weil etwas eingeklemmt wurde, dann wird der Schweißvorgang unterbrochen und die Leisten schwenken wieder in die Ausgangsstellung zurück.

Schließlich ist es ein weiteres bevorzugtes Merkmal des Verfahrens, dass die Schwenkbewegung der Leisten von Ausgangsstellung in Arbeitsstellung und umgekehrt jeweils zeitversetzt zu benachbarten Leisten durchgeführt wird. Da die benachbarten Leisten in Arbeitsstellung im Eckbereich eng nebeneinander liegen, würden diese bei gleichzeitigem Verschwenken während der Schwenkbewegung kollidieren. Um dies zu verhindern ist es wichtig, dass jeweils benachbarte Leisten zeitversetzt zueinander verschwenkt werden. Bei einer Schweißeinrichtung mit vier Leisten können so beispielsweise jeweils die gegenüberliegenden Leisten synchron und die jeweils benachbarten Leisten zeitversetzt verschwenkt werden.

### Kurze Beschreibung der Zeichnungsfiguren

Die Erfindung wird nun anhand von Ausführungsbeispielen sowie mit Hilfe der beiliegenden Figuren in größerem Detail beschrieben. Dabei zeigen
Fig. 1 eine schematische perspektivische Ansicht einer ersten Ausführungsform einer erfindungsgemäßen Vorrichtung mit den Leisten in Ausgangsstellung,
Fig. 2 eine Querschnittsansicht durch die Vorrichtung aus Fig. 1,
Fig. 3 die Vorrichtung aus Fig. 1 mit den Leisten in Arbeitsstellung,
Fig. 4 eine Querschnittsansicht durch die Vorrichtung aus Fig. 3 und
Fig. 5 eine schematische perspektivische Ansicht einer zweiten Ausführungsform einer erfindungsgemäßen Vorrichtung

### Beschreibung der Ausführungsarten

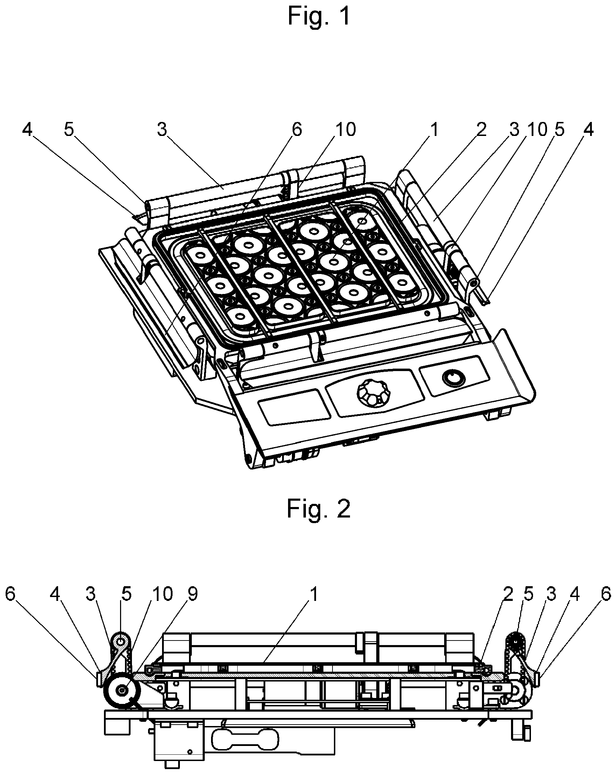

Die in Fig. 1 dargestellte Schweißeinrichtung weist eine Basisfläche 1 auf, welche hier als eine mit Auflagenoppen versehene Matte ausgebildet ist. Das Heizelement 2 in Form eines durchgehenden Heizdrahtes umrandet die Basisfläche 1. An den Seiten der Basisfläche 1 sind jeweils über Drehachsen 5 schwenkbar gelagerte Leisten 3 gelagert. Die jeweiligen Drehachsen 5 sind dabei um einen Normalabstand erhöht über der Basisfläche 1 angeordnet. An den freien Endabschnitten 4 der Leisten 3 sind Kontaktelemente 6 in Form von Silikonstreifen mit erhöhter Reibung angeordnet. Mit jeder Leiste 3 ist ein Antrieb 9 über einen Zahnriemen 10 mit der Drehachse der Leiste 3 verbunden, um diese zwischen Ausgangsstellung und Arbeitsstellung zu verschwenken.

In den Fig. 1 und 2 ist die Schweißeinrichtung in Ausgangsstellung dargestellt. Die Leisten sind dabei um mehr als 180°, nämlich um etwa 300° gegenüber der Arbeitsstellung nach außen verschwenkt, damit die Basisfläche von oben mit Folien sowie mit Aufschnitt beladen werden kann.

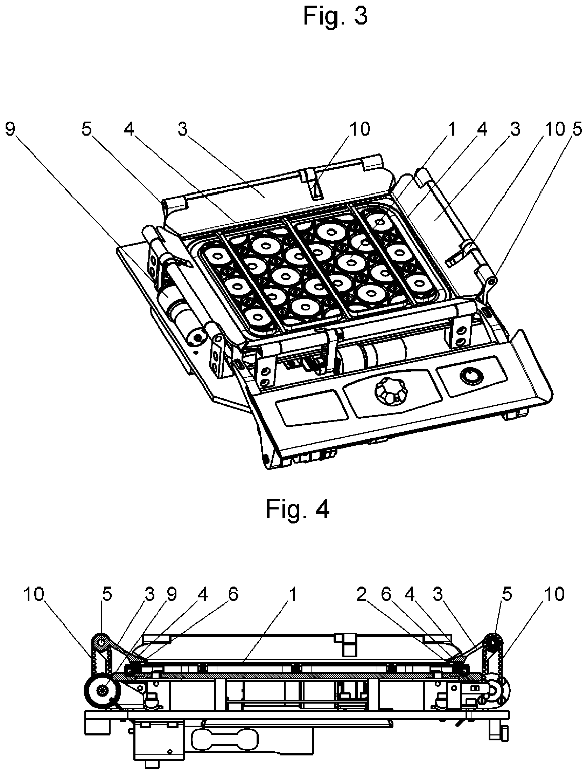

In den Fig. 3 und 4 ist die Schweißeinrichtung in der Arbeitsstellung dargestellt. Die Folien sowie etwaiges Schnittgut sind zur besseren Ansicht nicht eingezeichnet. In der Arbeitsstellung decken die freien Endabschnitte 4 der Leisten 3 das Heizelement 2 ab. Zu verschweißende Folien werden also zwischen den Kontaktelementen 6 und dem Heizelement 2 über den gesamten Randbereich hinweg eingeklemmt. An den Stellen, an denen zwei benachbarte Leisten 3 aneinander grenzen, sind die Leisten 3 abgeschrägt und liegen so in der Arbeitsstellung im Bereich des Heizelements 2 dicht nebeneinander, damit eine durchgehende gleichmäßige Schweißnaht gebildet werden kann. Da beim Schwenkvorgang diese Ränder der benachbarten Leisten 3 bei gleichzeitigem Schwenken kollidieren würden, werden die Leisten 3 paarweise mit der jeweils gegenüberliegenden Leiste und zeitversetzt zu den benachbarten Leisten 3 verschwenkt.

Um ein Einklemmen eines Benutzers in den Leisten 3 zu vermeiden, erfolgt das Verschwenken der Leisten 3 über den Antrieb 9 mit geringer Kraft, um Verletzungen zu vermeiden. Erst wenn die Arbeitsstellung erreicht ist und die Lage aller Leisten 3 in dieser Stellung sichergestellt ist, wird der Anpressdruck auf den Leisten 3 erhöht, um den Schweißvorgang durchführen zu können.

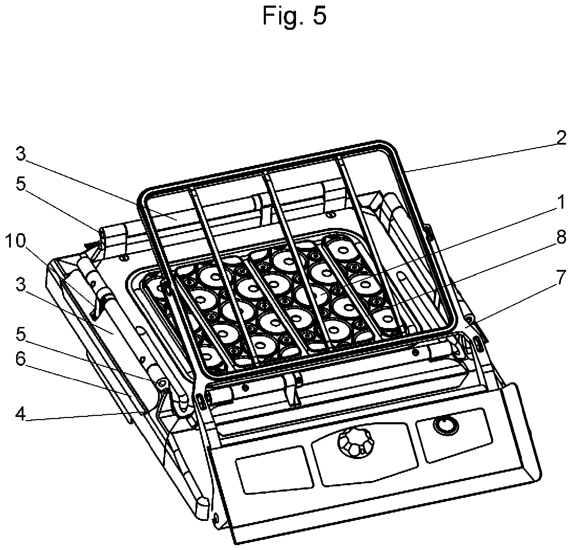

In Fig. 5 ist eine alternative Ausführungsform einer erfindungsgemäßen Schweißeinrichtung dargestellt, bei welcher das Heizelement 2 auf einem Auswerferarm 7 angeordnet ist. In der Fig. 5 ist der Auswerferarm 7 in der hochgeklappten Stellung dargestellt, in welche er verschwenkt wird, um eine fertige Folienverpackung von der Schweißeinrichtung zu entfernen. In der Ausgangsstellung wird der Auswerferarm 7 in die Basisfläche 1 zurückverschwenkt, wobei das Heizelement 2 sowie die restlichen Verbindungsteile des Auswerferarms 7 dann in entsprechenden Ausnehmungen 8 in der Basisfläche eintauchen.

## Patentansprüche

1. Schweißeinrichtung zum Verschweißen von zumindest zwei übereinanderliegenden Folien, insbesondere ausgebildet als Ablegetablett für eine Aufschnittschneidemaschine, umfassend eine als Ablegebereich für die Folien ausgebildete Basisfläche (1), ein Heizelement (2) sowie jeweils um ihre Längsachse umklappbare Leisten (3), welche zwischen einer Ausgangsstellung, in welcher die Basisfläche (1) von oben frei zugänglich ist, und einer Arbeitsstellung, in welcher die Leisten (3) mit ihren Endabschnitten (4) das Heizelement (2) abdecken, schwenkbar sind, **dadurch gekennzeichnet, dass** die Drehachsen (5) der Leisten (3) in einem gleichbleibenden Normalabstand zur Basisfläche (1) nach oben hin beabstandet sind, sodass die Leisten (3) in der Arbeitsstellung schräg zur Basisfläche (1) hin geneigt sind.

2. Schweißeinrichtung nach Anspruch 1, **dadurch gekennzeichnet, dass** die Leisten (3) zwischen der Ausgangsstellung und der Arbeitsstellung um mehr als 100°, vorzugsweise um mehr als 180° verschwenkbar sind.

3. Schweißeinrichtung nach Anspruch 1 oder 2, **dadurch gekennzeichnet, dass** an den Endabschnitten (4) der Leisten (3), welche mit der Folie in Berührung kommen, Kontaktelemente (6) aus einem Material mit hoher Reibung, wie beispielsweise aus Gummi, Silikon oder dergleichen, vorgesehen sind.

4. Schweißeinrichtung nach einem der Ansprüche 1 bis 3, **dadurch gekennzeichnet, dass** das Heizelement (2) einen die Basisfläche (1) umrandenden durchgehenden Ring, vorzugsweise in Form eines Rechtecks mit abgerundeten Ecken, ausbildet.

5. Schweißeinrichtung nach einem der Ansprüche 1 bis 4, **dadurch gekennzeichnet, dass** das Heizelement (2) in die Basisfläche (1) integriert ist.

6. Schweißeinrichtung nach einem der Ansprüche 1 bis 4, **dadurch gekennzeichnet, dass** das Heizelement (2) in einem Auswerferarm (7) integriert ist, welcher in seiner Ausgangsstellung in Vertiefungen (8) in der Basisfläche (1) liegt, und welcher zum Auswerfen der fertig verschweißten Folienverpackungen in eine Auswurfstellung hochschwenkbar ist.

7. Verfahren zum Verschweißen von zumindest zwei übereinanderliegenden Folien unter Verwendung einer Schweißeinrichtung umfassend eine als Ablegebereich für die Folien ausgebildete Basisfläche (1), ein Heizelement (2) sowie jeweils um ihre Längsachse umklappbare Leisten (3), welche zwischen einer Ausgangsstellung, in welcher die Basisfläche (1) von oben frei zugänglich ist, und einer Arbeitsstellung, in welcher die Leisten (3) mit ihren Endabschnitten (4) das Heizelement (2) abdecken, schwenkbar sind, **dadurch gekennzeichnet, dass** die Drehachsen (5) der Leisten (3) in einem gleichbleibenden Normalabstand zur Basisfläche (1) nach oben hin beabstandet sind, sodass die Leisten (3) in der Arbeitsstellung schräg zur Basisfläche (1) hin geneigt sind, **und dass** das Verfahren folgende Schritte umfasst:
- nach dem Auflegen von zumindest zwei Folien auf der Basisfläche (1) werden die Leisten (3) von der Ausgangsstellung in Richtung der Arbeitsstellung verschwenkt,
- bei Erreichen der Arbeitsstellung wird über in der Schweißeinrichtung angeordnete Sensoren sichergestellt, dass alle Leisten (3) die Arbeitsstellung erreicht haben,
- anschließend wird das Drehmoment an den Drehachsen (5) der Leisten (3) in Richtung der Arbeitsstellung erhöht, sodass die Folien von den Leisten (3) in Richtung des Heizelements (2) gepresst werden,
- danach wird das Heizelement (2) zum Verschweißen der Folien aktiviert,
- die Leisten (3) werden nach dem Schweißvorgang und dem Deaktivieren des Heizelements (2) wieder in Richtung Ausgangsstellung geschwenkt und die fertige Folienverpackung kann entnommen bzw. ausgeworfen werden.

8. Verfahren zum Verschweißen nach Anspruch 7, **dadurch gekennzeichnet, dass** die Schwenkbewegung der Leisten (3) von Ausgangsstellung in Arbeitsstellung und umgekehrt jeweils zeitversetzt zu benachbarten Leisten (3) durchgeführt wird.

## Claims

1. A welding device for welding at least two foils lying one on top of the other, in particular formed as a storage tray for a cold meat slicing machine, comprising a base surface (1) formed as a storage area for the foils, a heating element (2), and strips (3), each foldable about their longitudinal axis, which can be pivoted between an initial position, in which the base surface (1) is freely accessible from above, and a working position, in which the strips (3) cover the heating element (2) with their end sections (4), **characterized in that** the rotational axes (5) of the strips (3) are spaced apart upwardly at a constant normal distance to the base surface (1) such that in the working position the strips (3) are inclined obliquely towards the base surface (1).

2. The welding device according to claim 1, **characterised in that** the strips (3) are pivotable by more than 100°, preferably by more than 180°, between the initial position and the working position.

3. The welding device according to claim 1 or 2, **characterised in that** contact elements (6) made of a material with high friction such as rubber, silicone or the like, are provided at the end sections (4) of the strips (3) which come into contact with the foil.

4. The welding device according to any of the claims 1 to 3, **characterised in that** the heating element (2) forms a continuous ring surrounding the base surface (1), preferably in the form of a rectangle having rounded corners.

5. The welding device according to any of the claims 1 to 4, **characterised in that** the heating element (2) is integrated into the base surface (1).

6. The welding device according to any of the claims 1 to 4, **characterised in that** the heating element (2) is integrated in an ejector arm (7) which in its initial position lies in recesses (8) in the base surface (1) and which can be swivelled up into an ejection position for ejecting the finished welded foil packages.

7. A method for welding at least two foils lying one on top of the other using a welding device comprising a base surface (1) formed as a storage area for the foils, a heating element (2), and strips (3), each foldable about their longitudinal axis, which can be pivoted between an initial position, in which the base surface (1) is freely accessible from above, and a working position, in which the strips (3) cover the heating element (2) with their end sections (4), **characterized in that** the rotational axes (5) of the strips (3) are spaced apart upwardly at a constant normal distance to the base surface (1) such that in the working position the strips (3) are inclined obliquely towards the base surface (1), **and in that** the method comprises the following steps:
- after placing at least two foils on the base surface (1), the strips (3) are pivoted from the starting position towards the working position,
- upon reaching the working position, sensors arranged in the welding device ensure that all strips (3) have reached the working position,
- afterwards the torque on the rotational axes (5) of the strips (3) is increased in the direction of the working position such that the foils are pressed in the direction of the heating element (2) by the strips (3),
- then the heating element (2) is activated for welding the foils,
- the strips (3) are pivoted back into the direction of the starting position after the welding process and deactivation of the heating element (2) and the finished foil package can be removed and ejected, respectively.

8. The method for welding according to claim 7, **characterised in that** the pivoting motion of the strips (3) from the initial position to the working position and vice versa is each performed with a time delay with respect to adjacent strips (3).

## Revendications

1. Dispositif de soudage permettant de relier par soudage au moins deux feuilles superposées, réalisé plus particulièrement sous forme d'une table de dépôt destinée à une trancheuse de cuisine et comprenant une surface de base (1) réalisée en tant que zone de dépôt pour lesdites feuilles, un élément chauffant (2) ainsi que des plinthes (3) qui peuvent être rabattues autour de leur axe longitudinal et qui peuvent être pivotées entre une position de départ dans laquelle la surface de base (1) est accessible par le haut et une position de travail dans laquelle les parties terminales (4) des plinthes (3) viennent recouvrir l'élément chauffant (2), **caractérisé en ce que** les axes de rotation (5) des plinthes (3) sont espacés de la surface de base (1), vers le haut, d'une constante distance normale, faisant en sorte que, dans la position de travail, les plinthes (3) soient inclinées en oblique vers la surface de base (1).

2. Dispositif de soudage selon revendication 1, **caractérisé en ce que** les plinthes (5) peuvent être pivotées, entre la position de départ et la position de travail, de plus de 100°, préférentiellement de plus de 180°.

3. Dispositif de soudage selon les revendications 1 ou 2, **caractérisé en ce que** les parties terminales (4) des plinthes (3), qui entrent en contact avec la feuille, sont pourvues d'éléments de contact (6) réalisés en un matériau à friction élevée, par exemple en caoutchouc, silicone ou en matériaux apparentés.

4. Dispositif de soudage selon l'une des revendications 1 à 3, **caractérisé en ce que** l'élément chauffant (2) constitue un anneau continu qui entoure la surface de base (1) et présente, de préférence, la forme d'un rectangle aux coins arrondis.

5. Dispositif de soudage selon l'une des revendications 1 à 4, **caractérisé en ce que** l'élément chauffant (2) est intégré dans la surface de base (1).

6. Dispositif de soudage selon l'une des revendications 1 à 4, **caractérisé en ce que** l'élément chauffant (2) est intégré dans un bras d'éjection (7) lequel est situé, dans sa position de départ, dans des creux (8) au sein de la surface de base (1) et lequel peut être pivoté vers le haut afin d'éjecter des emballages en feuilles une fois leur reliure par soudage est complète.

7. Procédé permettant de relier par soudage au moins deux feuilles superposées, en mettant en œuvre un dispositif de soudage comprenant une surface de base (1) réalisée en tant que zone de dépôt pour lesdites feuilles, un élément chauffant (2) ainsi que des plinthes (3) qui peuvent être rabattues autour de leur axe longitudinal et qui peuvent être pivotées entre une position de départ dans laquelle la surface de base (1) est accessible par le haut et une position de travail dans laquelle les parties terminales (4) des plinthes (3) viennent recouvrir l'élément chauffant (2), **caractérisé en ce que** les axes de rotation (5) des plinthes (3) sont espacés de la surface de base (1), vers le haut, d'une constante distance normale, faisant en sorte que, dans la position de travail, les plinthes (3) soient inclinées en oblique vers la surface de base (1) **et que** le procédé comprend les étapes suivantes :
- après avoir mis en place au moins deux feuilles sur la surface de base (1), on fait pivoter les plinthes (3) depuis la position de départ en direction de la position de travail,
- lorsque la position de travail est atteinte, on vérifie au moyen de capteurs disposés dans le dispositif de soudage que toutes les plinthes (3) ont atteint la position de travail,
- ensuite, on augmente le couple agissant sur les axes de rotation (5) des plinthes (3) en direction de la position de travail, faisant que en sorte que les feuilles soient poussées par les plinthes (3) en direction de l'élément chauffant (2),
- ensuite, on active l'élément chauffant (2) afin de relier les feuilles par soudage,
- une fois le soudage terminé et l'élément chauffant (2) désactivé, on pivote les plinthes (3) de nouveau en direction de la position de départ ce qui permet alors que retirer et/ou éjecter l'emballage en feuilles prêt à l'usage.

8. Procédé de reliure par soudage selon la revendication 7, **caractérisé en ce que** l'on effectue le pivotement des plinthes (3) depuis la position de départ dans la position de travail et vice versa à chaque instance de manière décalée dans le temps par rapport aux plinthes (3) voisines.
